(19)

Europäisches Patentamt

European Patent Office

Office européen des brevets

(11) **EP 4 506 715 A1**

(12) **EUROPEAN PATENT APPLICATION**

(43) Date of publication:
**12.02.2025 Bulletin 2025/07**

(21) Application number: **23190898.9**

(22) Date of filing: **10.08.2023**

(51) International Patent Classification (IPC):
**G01S 7/02** *(2006.01)*    **G01S 13/22** *(2006.01)*
**G01S 13/56** *(2006.01)*

(52) Cooperative Patent Classification (CPC):
**G01S 7/0235; G01S 13/22; G01S 13/524;**
**G01S 13/56;** G01S 7/0234; G01S 7/282

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Infineon Technologies AG**
**85579 Neubiberg (DE)**

(72) Inventors:
• **WILL, Christoph Jürgen**
  **81673 München (DE)**
• **GLAS, Alexander**
  **81739 München (DE)**

(74) Representative: **2SPL Patentanwälte PartG mbB**
**Landaubogen 3**
**81373 München (DE)**

Remarks:
Amended claims in accordance with Rule 137(2)
EPC.

(54) **APPARATUS, RADAR SYSTEM AND METHOD**

(57)     It is proposed an apparatus, comprising circuitry configured to obtain a random delay for an emission of a radar pulse and control a radar sensor to emit the radar pulse at a point in time delayed by the random delay.

Fig. 1

**Description**

**Field**

The present disclosure relates to radar sensor control. Examples relate to an apparatus, a radar system and a method.

**Background**

When multiple radar sensors operate in proximity, interferences between the radar sensor can occur. These interferences can result in false or undetected targets. They can significantly affect the reliability and performance of radar-based detection. Existing approaches to mitigate interference may have primarily focused on interference cancellation algorithms which decrease the detection accuracy and increase the complexity of radar data processing. Therefore, there is a demand for an improved interference mitigation.

**Summary**

This demand may be satisfied by the subject matter of the independent claims.

Some aspects of the present disclosure relate to an apparatus, comprising circuitry configured to obtain a random delay for an emission of a radar pulse, and control a radar sensor to emit the radar pulse at a point in time delayed by the random delay.

Some aspects of the present disclosure relate to a method, comprising obtaining a random delay for an emission of a radar pulse, and controlling a radar sensor to emit the radar pulse at a point in time delayed by the random delay.

**Brief description of the Figures**

Some examples of apparatuses and/or methods will be described in the following by way of example only, and with reference to the accompanying figures, in which

Fig. 1 illustrates an example of an apparatus for randomly delaying a radar pulse;

Fig. 2a and Fig. 2b illustrate an example of a signal amplitude of a radar receive signal showing interference;

Fig. 3 illustrates an example of a radar system; and

Fig. 4 illustrates an example of a method.

**Detailed Description**

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

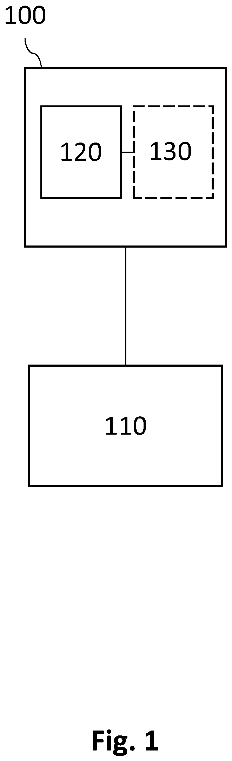

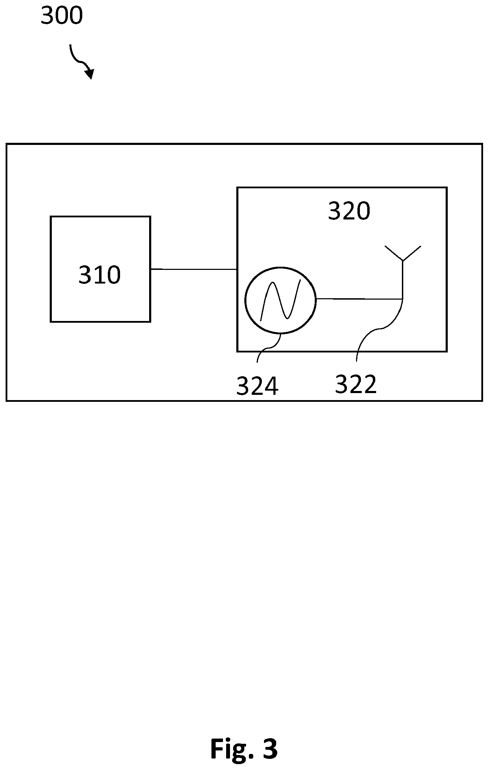

**Fig. 1** illustrates an example of an apparatus 100 coupled to a radar sensor 110. For instance, the apparatus 100 may be external to the radar sensor 110 and communicatively coupled to it. As an alternative to the example of Fig. 1, the apparatus 100 may be (e.g., partially or fully) integrated into the radar sensor 110. The apparatus 100 may be part of a radar system comprising the radar sensor 110, such as explained below with reference to Fig. 3.

The apparatus 100 comprises circuitry 120 and, optionally interface circuitry 130. In case interface circuitry 130 is present, the interface circuitry 130 may be communicatively coupled (e.g., via a wired or wireless connection) to the circuitry 120, e.g., for data or signal exchange between the interface circuitry 130 and the circuitry 120. The interface circuitry 130 may further be configured to establish a (e.g., wired or wireless) signal connection to the radar sensor 110. In case, the circuitry 120 is integrated into the radar sensor 110, the apparatus 100 may dispense with the interface circuitry 130.

The interface circuitry 130 may be any device or means for communicating or exchanging data. For instance, the interface circuitry 130 may be a set of electronic components, circuits, and/or subsystems for interaction between different interfacing entities such as devices, systems, or components. It may comprise voltage level shifters, buffers, amplifiers, filters, converters, multiplexers, demultiplexers, and/or various other electronic elements.

The circuitry 120 is configured to obtain (e.g., determine and/or generate) a random delay for an emission of a radar pulse. The circuitry 120 may digitally determine the random delay and/or analogously generate the random delay, as explained in the following:

In the former case, the circuitry 120 may comprise processing circuitry. The processing circuitry may be, e.g., a single dedicated processor, a single shared processor, or a plurality of individual processors, some of which or all of which may be shared, a digital signal processor (DSP) hardware, an application specific integrated circuit (ASIC), a microcontroller or a field programmable gate array (FPGA). The processing circuitry may optionally be coupled to, e.g., read only memory (ROM) for storing software, random access memory (RAM) and/or nonvolatile memory.

The processing circuitry may use any technique for determining a random delay. For instance, the processing circuitry may generate a (seemingly or true) random number or value using a random value generator such as at least one of a pseudorandom number generator, a hardware random number generator or alike. The pseudorandom number generator may be a deterministic algorithm that uses a seed value as an input to produce a seemingly random number. The seed value may be based on a clock signal or alike. The hardware random number generators may utilize physical processes that are inherently random, such as electronic noise or thermal noise to generate the random value.

Optionally or alternatively, the processing circuitry may receive (e.g., via the interface circuitry 130) the random number from an external source. The apparatus 100 may, for instance, be coupled to an entropy source, a noise source or a random value generator and receive the random value or the seed value therefrom.

The processing circuitry may determine the random delay based on that random value. To this end, the processing circuitry may perform further processing such as scaling the random number into a predefined delay range. The predefined delay range may be a pulse repetition interval of the radar pulse, for instance. The further processing may also include enforcing restrictions on the random delay, e.g., by modifying the random number such that a predefined probability distribution for the random numbers is achieved. Optionally or alternatively, a predefined probability distribution may also be enforced by the selection of the random value generator. For instance, in some examples, the processing circuitry is configured to determine the random delay using a random value generator with a uniform probability distribution. The uniform probability distribution may ensure that each outcome (random delay value) has an equal chance of occurring.

In the case of an analogue generation of the random delay, the circuitry 120 may comprise random delay circuitry. The random delay circuitry may be any type of electronic circuit which is capable of delaying a signal randomly. For instance, the random delay circuitry may comprise an RC circuit, a delay line or alike, coupled to a noise source. The circuitry 120 may comprise a random delay circuitry and the processing circuitry, for example, the processing circuitry may control the random delay circuitry in order to generate a random delay with predetermined characteristics, as explained above.

The random delay may indicate a time relative to a reference point in time, e.g., set by a clock signal of the radar sensor 110. The clock signal (clock pulse or clock cycle) may be a periodic electrical signal to coordinate the emission of radar pulses by the radar sensor 110. It may act as a timing reference for the sequential emission of the radar pulses. For instance, the clock signal may assign each radar pulse its pulse repetition interval by continuously setting a respective start (or end) of consecutive pulse repetition intervals. The clock signal may be generated by an oscillator of the radar sensor 110. The radar sensor 110 may be a pulsed Doppler radar sensor (Doppler radar sensor in pulse mode or a duty-cycled Doppler radar sensor), for instance.

The pulse repetition interval (PRI) may refer to a time duration in which a radar pulse of a pulse train or a sequence of pulses is to be emitted. PRI may therefore determine the timing and spacing between radar pulses. The PRI may include a duty cycle in which the radar pulse is to be emitted and a pause or dwell time in which the radar sensor 110 remains silent, i.e., no pulse is emitted by the radar sensor 110 at least until the next pulse repetition interval starts.

The circuitry 120 may be configured to obtain a respective random delay for each radar pulse, for each of a predefined number of radar pulses, for each frame of radar pulses or for each of a predefined number of frames, for instance. That is, for each radar pulse or set of radar pulses, a new random delay is obtained which is (most probably) different to the previous random delay. The new generation of random delays for each frame or set of frames is described further below.

The circuitry 120 is further configured to control the radar sensor 110 to emit the radar pulse at a point in time delayed by the random delay. For instance, the apparatus 100 may transmit the random delay to the radar sensor 110 (e.g., via the interface circuitry 130) to trigger the emission of the radar pulse based on the random delay. In case the circuitry 120 digitally determines the random delay, the processing circuitry of the circuitry 120 may be configured to control a delay circuitry of the radar sensor 110 in order to delay the emission of the radar pulse by a duration corresponding to the random delay. The delay circuitry of the radar sensor 110 may be coupled to the oscillator and delay the clock signal by the random delay. Alternatively, the circuitry 120 may transmit the random delay to antenna control circuitry of the radar sensor 110 which sets the emission time of the radar pulse at an antenna of the radar sensor 110 according to the random delay. In case, the circuitry 120 analogously generates the random delay, the circuitry 120 may be coupled to the oscillator and/or the antenna and perform the delaying itself.

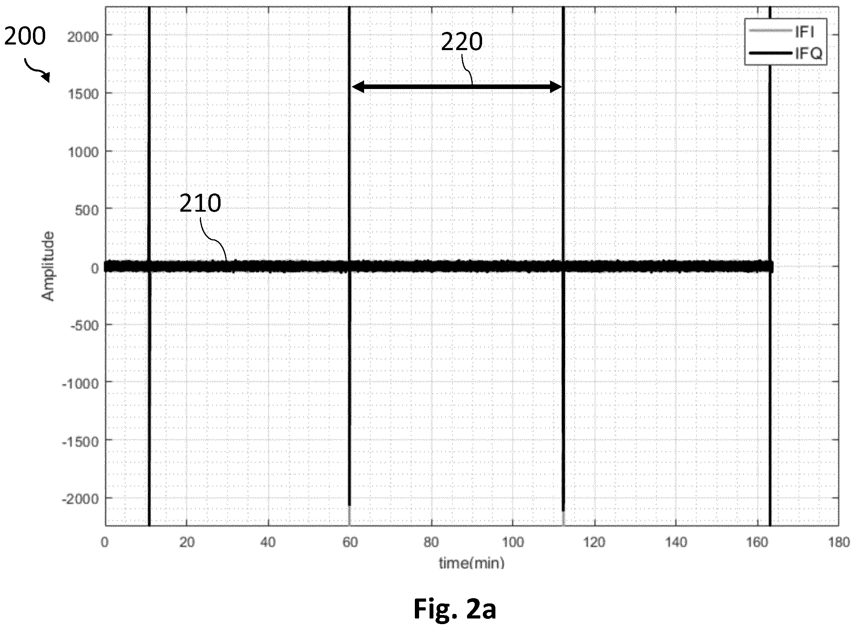

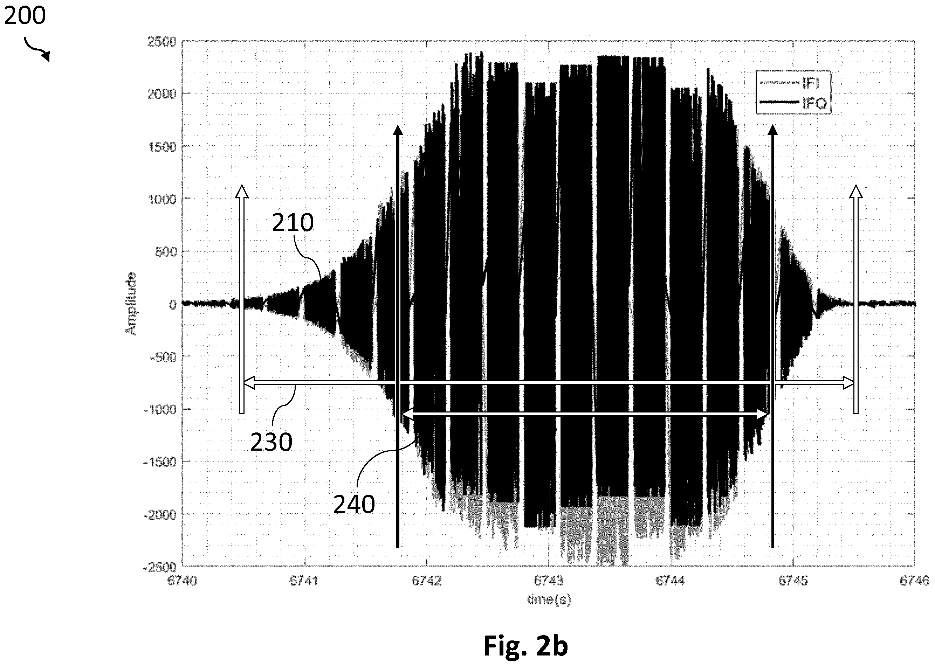

By randomly delaying the emission time of radar pulses, an interference between the radar sensor 110 and a second, different radar sensor (of same or different type) operating at a same or similar radio frequency in the vicinity of the radar sensor 110 may be mitigated. The interference may cause false targets or falsely trigger a motion detection in the analysis of the radar signals since the radiation of the second radar sensor may be mistaken for an echo of the radar pulse of the radar sensor 110. The interference may in some cases be so strong, e.g., when the radar sensors are close to each other, that during the interference the radar sensor 110 is "blind", i.e., a valid target or target motion which may be further away than the second radar sensor cannot be detected since the target (motion) signature in the recorded data of the echo is "covered" (superposed) by the interference signature. An example of an interference is illustrated by **Fig. 2a** and **Fig. 2b.**

Fig. 2a and Fig. 2b show diagrams 200 of an amplitude 210 of I and Q samples of a radar receive signal (here: an intermediate frequency signal) generated by a radar sensor in two different time scales: over a time interval of 180 minutes and 6 seconds, respectively. The radar sensor ("victim") is placed in the vicinity of a second radar sensor ("aggressor") operating at a substantially same radio frequency (e.g., within a frequency range of 24,0 to 24,25 Gigahertz). The radar sensor emits a radar pulse and then receives a radar signal, which is assumed to be an echo of the radar pulse reflected back from objects in its field of view. The radar sensor then generates the radar receive signal by IQ sampling the received radar signal, yielding the diagrams 200 of Fig. 2a and Fig. 2b.

The effect of an interference may alternatively be measured in a configuration where a receiving antenna of the victim and a transmitting antenna of the aggressor are coupled via a radio frequency cable and optionally an attenuator. The characteristics of the cable (e.g., cable loss) and the attenuator may correspond to a certain distance between the victim and the aggressor in a free-field measurement. In a specific interference scenario, the impedance of the radar sensors may be 50 Ohm, the transmitted power of the transmitting antenna may be 0 decibel milliwatt, an antenna gain of the transmitting antenna and the receiving antenna may be 10 decibel. An estimated power of the receiving antenna in a free-field of 50 centimeters to 1 meter may be -34 to 40 decibel milliwatt provided via the attenuator and the cable.

In the example of Fig. 2a and Fig. 2b, the radar sensor and the second radar sensor may be Doppler radar sensors operating in pulse mode (pulsed Doppler radar sensor, duty-cycled Doppler radar sensor). The pulse mode operation of the radar sensors involves transmitting bursts or pulses of radio waves (radar pulses), for example, on the order of microseconds in duration. That is, both radar sensors do not continuously emit radar signals. The pulse mode may be implemented for saving computational and energy resources. It is to be noted that the technique described herein is not restricted to a certain type of radar sensor nor to a scenario where the victim and the aggressor are of the same type. For example, at least one of the radar sensors may be a frequency modulated radar sensor.

The radar sensor may operate with a pulse repetition interval with a predefined duration, e.g., of 1 millisecond, and with predefined a pulse width of the radar pulses, e.g., of 1 microsecond. The victim and the aggressor may base their emission timing on a clock signal generated using an oscillator. The clocking of the radar sensors may be similar, e.g., in case of two similar clock sources. For example, both, the victim and the aggressor may comprise a respective crystal oscillator, e.g., of a frequency of 38,4 Megahertz. Due to non-idealities of the clock sources, the timing of the clock sources may slowly diverge (drift) away of each other or towards each other.

Fig. 2a shows that, in regular time intervals, the amplitude 210 exhibits a peak. In the example of Fig. 2a, the time interval between two subsequent peaks has a duration 220 of 51 minutes, yielding a pulse repetition interval matching of 0,3 parts per million. These peaks indicate an interference between victim and aggressor, that is, a radiation of the aggressor coincides with a time when the victim "listens" for an echo of its radar pulse. The regular nature of the occurrence is due to the relatively stable mismatch between the oscillators, causing that the time differences between pulses of the victim and pulses of the aggressor gradually add up until a full pulse repetition interval is passed through, thus, the clockings match and separate regularly. It is to be noted that the technique described herein is however not restricted to such regular interferences. It is likewise applicable to scenarios where interferences occur irregularly.

Fig. 2b shows a time section of 6 seconds of the course of amplitude 210 shown in Fig. 2a. Specifically, it shows the time between the 6740th second and the 6746th second of the amplitude 210 shown in Fig. 2a. It provides a view zoomed into one of the peaks shown in Fig. 2a. The interfered and consequently high values of the amplitude 210 shown in Fig. 2b persist over a duration 230 of approximately 5 seconds, mainly over a duration 240 of approximately 3 seconds.

The measurements shown in Fig. 2a and Fig. 2b can be cross-checked by a calculation of the interference period. Assuming an interference frequency between aggressor and victim of 1 occurrence every 51 minutes (3060 seconds), the oscillator matching can be approximated based on the following Equation 1:

$$\text{Oscillator matching} = 1-(((T_{IPP})/(T_{PRT}))/((T_{IPP})/(T_{PRT})+1)) = 0,327 \text{ parts per million}$$

Equation 1, where $T_{IPP}$ is the interference period (here 3060 seconds), $T_{PRT}$ is the duration of a pulse repetition interval (here 1 millisecond).

The duration of an interference for a pulse width $T_{PW}$ of 1 microsecond can be approximated based on the following Equation 2:

$$\text{Duration of main interference} = (T_{PW})/(oscillator\ matching) = 3,06 \text{ seconds}$$

Equation 2.

The mathematical cross check fits well to the measurement shown in Fig. 2a and Fig. 2b with an interference duration of approximately 3 seconds. It may be assumed that with closer clock frequencies, the interference duration and also the non-interference duration get longer.

The scenario illustrated by Fig. 2a and Fig. 2b show that interferences may conventionally affect a radar sensor over a long duration where substantially all samples are affected. A conventional interference cancellation may thus be impractical since the affected radar sensor would be blind for a potentially too long period of time, i.e., the radar sensor would not be able to detect any true targets for an inappropriately long time if the interference times are cut out of the received radar signal.

The random delaying of the emission time of a radar pulse as described herein may prevent such a long interference period and/or a frequent occurrence of interferences since it may statistically establish asynchrony between an emission timing of the victim and an emission timing of the aggressor. Interferences may thus occur scarcer and/or for shorter periods of time.

Referring back to Fig. 1, the random delay may be constrained by the apparatus 100 such that it differs from a duration of a pulse repetition interval of the radar pulse and a multiple thereof. That is, the random delay may cause a shift of a start of the radar pulse within its original or a subsequent pulse repetition interval, e.g., a shift relative to a start of said pulse repetition interval. Since an emission timing of the second radar sensor is assumed to stay unchanged or to be likewise adjusted randomly, the radar pulse emitted by the radar sensor 110 or its echo will unlikely coincide with a radar signal of the second radar sensor.

In some examples, the random delay may be inferior to a duration of a pulse repetition interval of the radar pulse or inferior to a duration of the dwell time. For example, the random delay may be constrained by the circuitry 120 such that no pulse repetition interval is omitted but the emission is shifted within a pulse repetition interval of the radar pulse. For example, the start of the emission of the radar pulse may be preliminarily set to the start of the PRI and the random delay causes the emission to be postponed within this PRI.

Depending on the specific delay mechanism, the delay may have a certain granularity, i.e., only discrete delay values may be randomly selected. The smaller this granularity (delay pattern) may be the lesser the chance of interference. For instance, a granularity of 2 microseconds for a pulse width of 1 microsecond and a duration of a PRT of 10 milliseconds may imply an interference chance of 1/5000 (in case of similar oscillators used by the radar sensor 110 and the second radar sensor). The random delay may have any value or duration, e.g., depending on said granularity. For example, the duration may be at least one microsecond or a multiple thereof. In some examples, a duration of the random delay may be greater than a pulse width of the radar pulse. The latter may prevent that the radar pulse is shifted too little for leaving the interference window.

For any subsequent radar pulse, the random delay may be re-determined: The circuitry 120 may be further configured to obtain a second, different random delay for an emission of a second radar pulse and control the radar sensor 110 to emit the second radar pulse at a point in time delayed by the second random delay. In this manner, the random emission of radar pulses may be continued to prevent interferences.

In some cases, the random delay may be hold for a frame of radar pulses and re-calculated for a subsequent frame of radar pulses. For example, the circuitry 120 may be configured to control the radar sensor to start an emission of a frame of multiple radar pulses at a point in time delayed by the random delay. The frame may comprise pulses which cause echoes that are to be processed together to, e.g., estimate the velocity or presence of a moving target. Each radar pulse of one frame (or a set of frames) may be shifted by the same delay, but this delay may change from frame (or one set of frames) to frame (or to subsequent set of frames). This may simplify a signal processing and filtering of the resulting radar data. For example, the echoes of the radar pulses of one frame may be coherently superimposed more easily. The circuitry 120 may be configured to control the radar sensor to start an emission of a second frame of multiple radar pulses at a point in time delayed by a second random delay. The apparatus 100 may thus enable a random frame start delay dealing with self-interference of two radar sensor (e.g., two pulsed-Doppler radar sensors). In the case of a plurality of frames, the circuitry 120 may be configured to, for each of the plurality of frames of multiple radar pulses, obtain a respective random delay for an emission of said frame and control the radar sensor 110 to emit each of the plurality of frames based on the respective random delay. That is, a random delay may be re-determined for each of the frames.

The apparatus 100 may thus decrease the chance that two or more consecutive frames are disturbed to avoid longer interference time periods, in which the radar sensor 110 is blind. By re-determining the random delay for each frame, asynchrony may be established from frame to frame between the radar sensors. Interferences may occur more often or more rarely as their occurrence depends on the randomness and not only on an oscillator mismatch of the radar sensors. However, it may be extremely unlikely that interference lasts for several frames in a row.

The apparatus 100 may further perform processing of radar data after the radar pulse has been randomly emitted. For example, the apparatus 100 may further comprise processing circuitry or in case the circuitry 120 comprises processing circuitry, additional processing circuitry may be dispensed with. The processing circuitry may be configured to obtain radar data indicating an echo of the emitted radar pulse and detect at least one of presence and motion of a target based on the radar data. The apparatus 100 may thus be efficiently reused for the data processing. For example, the processing circuitry may be configured to detect the at least one of presence and motion of the target through determining a number of zero crossings in the radar data. Since the number of zero crossings indicate spectral characteristics of the radar data, their analysis may be used to detect targets, e.g., by thresholding the rate or number of zero crossings.

To further prevent false targets due to interference, a sliding windowing may be optionally used. The processing circuitry may thus be configured to detect the at least one of presence and motion of the target through applying a sliding window on the radar data. For example, the processing circuitry may be configured to detect the at least one of presence and motion of the target if a predefined number of consecutive frames of the radar data indicate the at least one of presence and motion of the target. Optionally or alternatively, the processing circuitry may be configured to detect the at least one of presence and motion of the target if at least a predefined number of frames from a further predefined number of consecutive frames indicate the at least one of presence and motion of the target, i.e., if a ratio of target-indicating frames to non-target-indicating frames exceeds a certain threshold. Thus, a frame-based motion detection may thus be implemented: For example, multiple (e.g., 2 or 3) frames in a row may be searched for targets, and a target is assumed to be detected only if at least a predefined number of the multiple frames indicate a target or if at least $x > 1$ out of $y \geq 2$ frames indicate a target. The sliding window may be realized by gathering a temporary or preliminary detection output for several frames and setting a final or updated detection output for said several frames.

The detection of a target (motion or presence) may be used to wake up an external microcontroller: The processing circuitry may be further configured to, if at least one of presence and motion of the target is detected, wake up external processing circuitry for further processing the radar data. For example, the external processing circuitry may exclusively process the frames in which a target is detected. The further processing may include more complex operations like target tracking, determination of a velocity, range or angle of the target, etc. Thus, the apparatus 100 may offload a (main) processor from computationally intensive operations by sorting out irrelevant frames (frames without a target).

**Fig. 3** illustrates an example of a radar system 300. The radar system 300 comprise an apparatus 310 as described herein, such as apparatus 100, and the radar sensor 320. The radar sensor 320 comprises at least one antenna 322 configured to emit the radar pulse at the delayed point in time.

Although the apparatus 310 and the radar sensor 320 are depicted as separate blocks in Fig. 3, in other examples, the apparatus 310 may in part or in entirety be included in the radar sensor 320, which thus correspondingly includes all or part of the circuitry 120 (e.g., processing circuitry) of the apparatus 310.

In case the apparatus 310 is only partially included in the radar sensor 320, the radar system 300 may include distributed processing circuitry carrying out respective parts of the processing steps, e.g., in the form of first processing (sub-) circuitry included in the radar sensor 320, and second processing (sub-) circuitry external to the sensor and in communication with the first processing circuitry through interface circuitry (e.g., interface circuitry 130), for instance, for exchange of data between the first and the second processing circuitry.

In case the apparatus 310 is integrated in the radar sensor 320, the processing circuitry and the radar sensor 320 may be jointly integrated in a single semiconductor chip, or in more than one semi-conductor chip.

In case the apparatus 310 is not included in the radar sensor 320, the circuitry may take the form of circuitry external to the radar sensor 320 and may be communicatively coupled therewith through interface circuitry.

The radar sensor 320 further comprises an optional crystal oscillator 324 configured to output a clock signal. A pulse repetition interval of the radar pulse is based on the clock signal. That is, the clock signal may provide the timing for the pulse repetition interval. For instance, a start of the pulse repetition interval may be set by counting a predefined number of pulses (e.g., falling or rising edges) of the clock signal. The crystal oscillator 324 may therefore be coupled to the antenna 322, e.g., to an antenna control circuit or alike.

The radar sensor 320 may in some examples further comprise delay circuitry coupled to the crystal oscillator 324 (e.g., between the crystal oscillator 324 and the antenna 322). The delay circuitry is configured to generate the random delay. As described above, in cases that the random delay is generated by the apparatus 310 or the random delay is implemented purely digitally, then the radar sensor 320 (or even the whole radar system 300) may dispense with an (analog) delay circuitry.

The radar sensor 320 may be a Doppler radar sensor in pulse mode (pulsed Doppler radar sensor, duty-cycled Doppler radar sensor), for instance. That is, the radar sensor 320 may be a Doppler radar sensor (e.g., emitting substantially a single frequency radiation) which is not continuously on, instead it emits short "pulses" when a sample is required to save power. The radar sensor 320 may, thus, be duty-cycled, i.e., have a duty cycle (ratio between pulse duration or pulse width and the period or pulse repetition interval) of less than 1. In such a radar sensor, (short-duration) radar pulses are transmitted, e.g., in bursts or packets. These radar pulses are reflected off objects in the radar's field of view, including stationary and moving targets. The radar sensor 320 then receives the reflected signals (echo), and generates a radar receive signal (e.g., an intermediate frequency signal) based on the received echo. By analyzing the Doppler shift of the returned signals, it may determine the velocity of targets relative to the radar sensor 320. The radar system 300 may determine the presence of persons based on a velocity signature in the radar receive signal, for instance.

More details and aspects of the radar system 300 are explained in connection with the proposed technique or one or more examples described above, e.g., with reference to Fig. 1. The radar system 300 may comprise one or more additional optional features corresponding to one or more aspects of the proposed technique, or one or more examples described above.

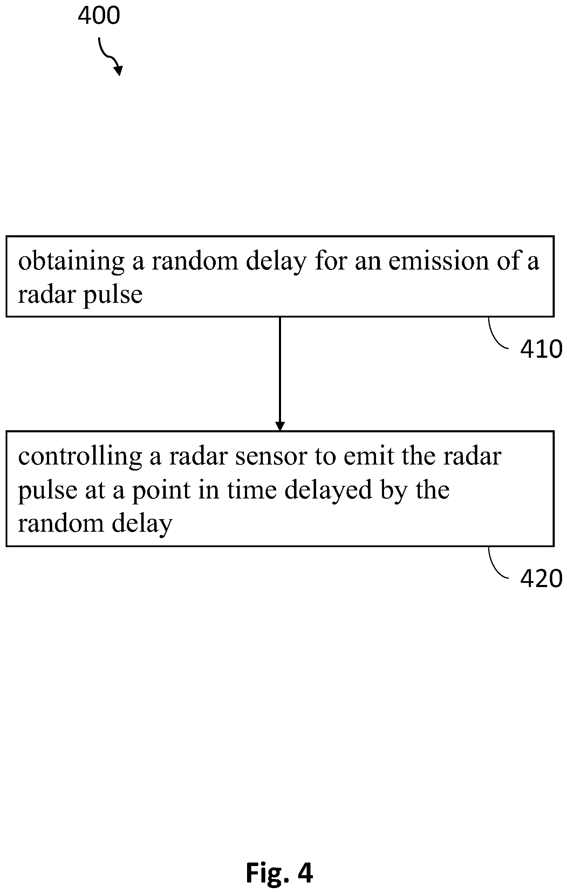

**Fig. 4** illustrates an example of a method 400. The method 400 may be performed by an apparatus as described herein, such as apparatus 100.

The method 400 comprises obtaining 410 a random delay for an emission of a radar pulse and controlling 420 a radar sensor to emit the radar pulse at a point in time delayed by the random delay.

More details and aspects of the method 400 are explained in connection with the proposed technique or one or more examples described above, e.g., with reference to Fig. 1. The method 400 may comprise one or more additional optional features corresponding to one or more aspects of the proposed technique, or one or more examples described above.

In the following, some examples of the proposed technique are presented:
An example (e.g., example 1) relates to an apparatus, comprising circuitry configured to obtain a random delay for an emission of a radar pulse, and control a radar sensor to emit the radar pulse at a point in time delayed by the random delay.

Another example (e.g., example 2) relates to a previous example (e.g., example 1) or to any other example, further comprising that the random delay differs from a duration of a pulse repetition interval of the radar pulse and a multiple thereof.

Another example (e.g., example 3) relates to a previous example (e.g., one of the examples 1 or 2) or to any other example, further comprising that the random delay is inferior to a duration of a pulse repetition interval of the radar pulse.

Another example (e.g., example 4) relates to a previous example (e.g., one of the examples 1 to 3) or to any other example, further comprising that the circuitry is configured to control the radar sensor to start an emission of a frame of multiple radar pulses at a point in time delayed by the random delay.

Another example (e.g., example 5) relates to a previous example (e.g., one of the examples 1 to 4) or to any other example, further comprising that the circuitry is further configured to obtain a second, different random delay for an emission of a second radar pulse, and control the radar sensor to emit the second radar pulse at a point in time delayed by the second random delay.

Another example (e.g., example 6) relates to a previous example (e.g., of examples 4 and 5), wherein the circuitry is configured to control the radar sensor to start an emission of a second frame of multiple radar pulses at a point in time delayed by the second random delay.

Another example (e.g., example 7) relates to a previous example (e.g., one of the examples 1 to 6) or to any other example, further comprising that the circuitry is configured to for each of a plurality of frames of multiple radar pulses, obtain a respective random delay for an emission of said frame, and control the radar sensor to emit each of the plurality of frames based on the respective random delay.

Another example (e.g., example 8) relates to a previous example (e.g., one of the examples 1 to 7) or to any other example, further comprising processing circuitry configured to obtain radar data indicating an echo of the emitted radar pulse, and detect at least one of presence and motion of a target based on the radar data.

Another example (e.g., example 9) relates to a previous example (e.g., example 8) or to any other example, further comprising that the processing circuitry is configured to detect the at least one of presence and motion of the target if a predefined number of consecutive frames of the radar data indicate the at least one of presence and motion of the target.

Another example (e.g., example 10) relates to a previous example (e.g., example 8) or to any other example, further comprising that the processing circuitry is configured to detect the at least one of presence and motion of the target if at least a predefined number of frames from a further predefined number of consecutive frames indicate the at least one of presence and motion of the target.

Another example (e.g., example 11) relates to a previous example (e.g., one of the examples 8 to 10) or to any other example, further comprising that the processing circuitry is configured to detect the at least one of presence and motion of the target through applying a sliding window on the radar data.

Another example (e.g., example 12) relates to a previous example (e.g., one of the examples 8 to 11) or to any other example, further comprising that the processing circuitry is further configured to, if at least one of presence and motion of the target is detected, wake up external processing circuitry for further processing the radar data.

Another example (e.g., example 13) relates to a previous example (e.g., one of the examples 8 to 12) or to any other example, further comprising that the processing circuitry is configured to detect the at least one of presence and motion of the target through determining a number of zero crossings in the radar data.

Another example (e.g., example 14) relates to a previous example (e.g., one of the examples 1 to 13) or to any other example, further comprising that the circuitry is configured to determine the random delay using a random value generator with a uniform probability distribution.

Another example (e.g., example 15) relates to a previous example (e.g., one of the examples 1 to 14) or to any other example, further comprising that the random delay has a duration of at least one microsecond or a multiple thereof.

Another example (e.g., example 16) relates to a previous example (e.g., one of the examples 1 to 15) or to any other example, further comprising that a duration of the random delay is greater than a pulse width of the radar pulse.

An example (e.g., example 17) relates to a radar system, comprising an apparatus of a previous example, and the radar sensor, wherein the radar sensor comprises at least one antenna configured to emit the radar pulse at the delayed point in time.

Another example (e.g., example 18) relates to a previous example (e.g., example 17) or to any other example, further comprising that the radar sensor comprises a crystal oscillator configured to output a clock signal, and wherein a pulse repetition interval of the radar pulse is based on the clock signal.

Another example (e.g., example 19) relates to a previous example (e.g., example 18) or to any other example, further comprising that the radar sensor comprises delay circuitry coupled to the crystal oscillator and configured to generate the random delay.

Another example (e.g., example 20) relates to a previous example (e.g., one of the examples 17 to 19) or to any other example, further comprising that the radar sensor is a pulsed Doppler radar sensor.

An example (e.g., example 21) relates to a method, comprising obtaining a random delay for an emission of a radar pulse, and controlling a radar sensor to emit the radar pulse at a point in time delayed by the random delay.

Another example (e.g., example 22) relates to a non-transitory machine-readable medium having stored thereon a program having a program code for performing the method of example 21, when the program is executed on a processor or a programmable hardware.

Another example (e.g., example 23) relates to a program having a program code for performing the method of example 21, when the program is executed on a processor or a programmable hardware.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F) PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

**Claims**

1.    An apparatus (100), comprising circuitry (120) configured to:

   obtain a random delay for an emission of a radar pulse; and
   control a radar sensor (110) to emit the radar pulse at a point in time delayed by the random delay.

2.    The apparatus (100) of claim 1, wherein the random delay is inferior to a duration of a pulse repetition interval of the radar pulse.

3.    The apparatus (100) of any one of the previous claims, wherein the circuitry (120) is configured to control the radar sensor (110) to start an emission of a frame of multiple radar pulses at a point in time delayed by the random delay.

4.    The apparatus (100) of any one of the previous claims, wherein the circuitry (120) is further configured to:

   obtain a second, different random delay for an emission of a second radar pulse; and
   control the radar sensor (110) to emit the second radar pulse at a point in time delayed by the second random delay.

5.    The apparatus (100) of claims 3 and 4, wherein the circuitry (120) is configured to control the radar sensor (110) to start an emission of a second frame of multiple radar pulses at a point in time delayed by the second random delay.

6.    The apparatus (100) of any one of the previous claims, wherein the circuitry (120) is configured to:

   for each of a plurality of frames of multiple radar pulses, obtain a respective random delay for an emission of said frame; and
   control the radar sensor (110) to emit each of the plurality of frames based on the respective random delay.

7.    The apparatus (100) of any one of the previous claims, further comprising processing circuitry (120) configured to:

   obtain radar data indicating an echo of the emitted radar pulse; and
   detect at least one of presence and motion of a target based on the radar data.

8.    The apparatus (100) of claim 7, wherein the processing circuitry (120) is configured to detect the at least one of presence and motion of the target if a predefined number of consecutive frames of the radar data indicate the at least one of presence and motion of the target.

9.    The apparatus (100) of claim 7, wherein the processing circuitry (120) is configured to detect the at least one of presence and motion of the target if at least a predefined number of frames from a further predefined number of consecutive frames indicate the at least one of presence and motion of the target.

10.   The apparatus (100) of any one of the previous claims, wherein the circuitry (120) is configured to determine the random delay using a random value generator with a uniform probability distribution.

11. A radar system (300), comprising:

an apparatus (310) according to any one of the previous claims; and
the radar sensor (320), wherein the radar sensor (320) comprises at least one antenna (322) configured to emit the radar pulse at the delayed point in time.

12. The radar system (300) of claim 11, wherein the radar sensor (320) comprises a crystal oscillator (324) configured to output a clock signal, and wherein a pulse repetition interval of the radar pulse is based on the clock signal.

13. The radar system (300) of claim 12, wherein the radar sensor (320) comprises delay circuitry coupled to the crystal oscillator (324) and configured to generate the random delay.

14. The radar system (300) of any one of claims 11 to 13, wherein the radar sensor (320) is a pulsed Doppler radar sensor (320).

15. A method (400), comprising:

obtaining (410) a random delay for an emission of a radar pulse; and
controlling (420) a radar sensor to emit the radar pulse at a point in time delayed by the random delay.

**Amended claims in accordance with Rule 137(2) EPC.**

1. An apparatus (100), comprising circuitry (120) configured to:

obtain a random delay for an emission of a radar pulse, wherein the random delay is inferior to a duration of a pulse repetition interval of the radar pulse;
control a radar sensor (110) to emit the radar pulse at a point in time delayed by the random delay; and
start an emission of a frame of multiple radar pulses at a point in time delayed by the random delay.

2. The apparatus (100) of any one of the previous claims, wherein the circuitry (120) is further configured to:

obtain a second, different random delay for an emission of a second radar pulse; and
control the radar sensor (110) to emit the second radar pulse at a point in time delayed by the second random delay.

3. The apparatus (100) of claim 2, wherein the circuitry (120) is configured to control the radar sensor (110) to start an emission of a second frame of multiple radar pulses at a point in time delayed by the second random delay.

4. The apparatus (100) of any one of the previous claims, wherein the circuitry (120) is configured to:

for each of a plurality of frames of multiple radar pulses, obtain a respective random delay for an emission of said frame; and
control the radar sensor (110) to emit each of the plurality of frames based on the respective random delay.

5. The apparatus (100) of any one of the previous claims, further comprising processing circuitry (120) configured to:

obtain radar data indicating an echo of the emitted radar pulse; and
detect at least one of presence and motion of a target based on the radar data.

6. The apparatus (100) of claim 5, wherein the processing circuitry (120) is configured to detect the at least one of presence and motion of the target if a predefined number of consecutive frames of the radar data indicate the at least one of presence and motion of the target.

7. The apparatus (100) of claim 5, wherein the processing circuitry (120) is configured to detect the at least one of presence and motion of the target if at least a predefined number of frames from a further predefined number of consecutive frames indicate the at least one of presence and motion of the target.

8. The apparatus (100) of any one of the previous claims, wherein the circuitry (120) is configured to determine the random delay using a random value generator with a uniform probability distribution.

9. A radar system (300), comprising:

    an apparatus (310) according to any one of the previous claims; and
    the radar sensor (320), wherein the radar sensor (320) comprises at least one antenna (322) configured to emit the radar pulse at the delayed point in time.

10. The radar system (300) of claim 9, wherein the radar sensor (320) comprises a crystal oscillator (324) configured to output a clock signal, and wherein a pulse repetition interval of the radar pulse is based on the clock signal.

11. The radar system (300) of claim 10, wherein the radar sensor (320) comprises delay circuitry coupled to the crystal oscillator (324) and configured to generate the random delay.

12. The radar system (300) of any one of claims 9 to 11, wherein the radar sensor (320) is a pulsed Doppler radar sensor (320).

13. A method (400), comprising:

    obtaining (410) a random delay for an emission of a radar pulse, wherein the random delay is inferior to a duration of a pulse repetition interval of the radar pulse;
    controlling (420) a radar sensor to emit the radar pulse at a point in time delayed by the random delay; and
    starting an emission of a frame of multiple radar pulses at a point in time delayed by the random delay.

14. A non-transitory machine-readable medium having stored thereon a program having a program code for performing the method of claim 13, when the program is executed on a processor or a programmable hardware.

15. A program having a program code for performing the method of claim 13, when the program is executed on a processor or a programmable hardware.

100

120 130

110

**Fig. 1**

**Fig. 2a**

**Fig. 2b**

300

310

320

324    322

**Fig. 3**

400

obtaining a random delay for an emission of a radar pulse

410

controlling a radar sensor to emit the radar pulse at a point in time delayed by the random delay

420

**Fig. 4**

Europäisches
Patentamt

European
Patent Office

Office européen
des brevets

# EUROPEAN SEARCH REPORT

Application Number

EP 23 19 0898

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2018 059826 A (KYOCERA CORP) 12 April 2018 (2018-04-12) * paragraph [0001] - paragraph [0080]; figure 21 * ----- | 1,3-13, 15 | INV. G01S7/02 G01S13/22 ADD. G01S13/56 |
| X | US 2012/256778 A1 (LABITT BRUCE DAVID [US] ET AL) 11 October 2012 (2012-10-11) * paragraph [0006] - paragraph [0007] * * paragraph [0016] - paragraph [0036]; figures 1,2 * ----- | 1,2,4, 7-9, 11-15 | |

TECHNICAL FIELDS
SEARCHED     (IPC)

G01S

The present search report has been drawn up for all claims

| Place of search | Date of completion of the search | Examiner |
|---|---|---|
| Munich | 23 January 2024 | Heiß, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 0898

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2024

| Patent document cited in search report | Publication date | Patent family member(s) | | Publication date |
|---|---|---|---|---|
| JP 2018059826 A | 12-04-2018 | JP | 6753755 B2 | 09-09-2020 |
| | | JP | 2018059826 A | 12-04-2018 |
| US 2012256778 A1 | 11-10-2012 | EP | 1494043 A2 | 05-01-2005 |
| | | JP | 2005024563 A | 27-01-2005 |
| | | US | 2012256778 A1 | 11-10-2012 |

EPO FORM P0459

For more details about this annex : see Official Journal of the European Patent Office, No. 12/82